# FASCICULE DE BREVET EUROPEEN

(11) **EP 2 423 655 B1**
(45) Date de publication et mention de la délivrance du brevet: **07.08.2013**
(21) Numéro de dépôt: 11178819.6
(22) Date de dépôt: 25.08.2011
(51) Int. Cl.: G01L 3/10, B29C 45/14, G01L 5/22

(54) **Dispositif de détection de couple à bagues collectrices pour direction de véhicule automobile**
Kollektorring-Vorrichtung zur Erkennung des Drehmoments für die Lenkung eines Kraftfahrzeugs
Torque detection device with rotating ring for automobile steering system

(30) Priorité: 31.08.2010 FR 1056911
(43) Date de publication de la demande: 29.02.2012
(73) Titulaire: Jtekt Europe, 69540 Irigny (FR)
(72) Inventeur: Rey, Laurent, 69100 VILLEURBANNE (FR)
(74) Mandataire: Chevalier, Renaud Philippe

(56) Documents cités:
- EP-A1- 1 950 544
- EP-A1- 2 103 920
- EP-A2- 1 850 106
- FR-A1- 2 918 953

## Description

La présente invention concerne, de façon générale, les systèmes de direction des véhicules automobiles. Elle se rapporte, plus particulièrement, à un dispositif de détection de couple pour une direction de véhicule automobile, ce dispositif étant destiné à mesurer le couple exercé par le conducteur du véhicule sur le volant de conduite, en vue de l'assistance électrique ou hydraulique de la direction. Encore plus particulièrement, cette invention s'intéresse à un dispositif de détection de couple dit « à bagues collectrices », fonctionnant sur un principe magnétique, dont un composant essentiel est un support collecteur de flux magnétique, de forme générale annulaire, comprenant intérieurement deux bagues collectrices métalliques, et extérieurement un bouclier de protection électromagnétique.

Un tel composant de dispositif de détection de couple est décrit, par exemple, dans la demande de brevet européen EP 2 103 920 A1 au nom du Demandeur. Ce document prévoit, notamment, un support collecteur de flux dans lequel les deux bagues collectrices sont surmoulées par une matière plastique, qui forme une masse annulaire. Le bouclier de protection électromagnétique étant mis en place sur la face extérieure de la masse de matière plastique, l'ensemble ainsi constitué est lui-même surmoulé dans un carter, lui aussi en matière plastique, qui appartient au système de direction concerné.

Un dispositif similaire est également décrit dans la demande de brevet européen EP 1950544 A1, ce document indiquant diverses possibilités pour la réalisation et le montage du bouclier de protection électromagnétique.

Ce dispositif existant présente l'inconvénient d'être délicat à mettre en oeuvre. En particulier, comme il résulte de ce qui précède, il nécessite deux opérations successives de surmoulage : l'une pour les bagues collectrices, l'autre pour le support collecteur de flux. L'opération de surmoulage du support collecteur de flux est particulièrement délicate, car sa circularité imparfaite rend difficile son introduction dans l'outillage de surmoulage, en nécessitant un effort d'introduction élevé qui risque de l'endommager. De plus, lors de l'opération de surmoulage du support collecteur de flux, il existe des risques importants d'infiltration de matière, qui peuvent conduire à un masquage des bagues collectrices, altérant leur fonctionnement.

Le document EP 1850106 A2 décrit une solution pour la réalisation d'un dispositif de détection du couple sans bouclier de protection électromagnétique, avec utilisation d'une technique de surmoulage particulière.

Enfin, la demande de brevet français FR 2918953 divulgue, dans un domaine technique différent, l'utilisation d'une structure de maintien propre à fixer la position relative d'au moins deux armatures, avant injection d'une garniture en matériau élastique moulable.

La présente invention vise à remédier à ces inconvénients précédemment exposés, et elle a donc pour but de fournir un dispositif de détection de couple, du genre ici concerné, dont la structure permet une fabrication plus aisée, en particulier en ne nécessitant plus qu'une seule opération de surmoulage.

A cet effet, l'invention a pour objet un dispositif de détection de couple pour direction de véhicule automobile, le dispositif comprenant un support collecteur de flux magnétique, de forme générale annulaire, avec deux bagues collectrices disposées du côté intérieur du support collecteur, et avec un bouclier de protection électromagnétique disposé du côté extérieur du support collecteur, le dispositif étant prévu pour être placé dans un carter d'un système de direction, ce dispositif étant caractérisé par le fait que ledit support collecteur de flux magnétique comporte une ossature de forme générale annulaire, pourvue intérieurement de moyens d'accrochage et de positionnement des bagues collectrices, et pourvue extérieurement de moyens de maintien et de positionnement du bouclier de protection électromagnétique, cette ossature présentant, dans son épaisseur entre les bagues collectrices et le bouclier, d'une part des parties pleines imposant une distante radiale constante entre lesdites bagues collectrices et le bouclier, et d'autre part des zones évidées, aptes à permettre une circulation et pénétration de matière plastique entre les bagues collectrices et le bouclier, lors d'une opération de surmoulage du dispositif dans le carter.

Ainsi, en remplacement du surmoulage des bagues collectrices, l'invention propose un assemblage mécanique de ces bagues, et aussi du bouclier de protection électromagnétique, sur une ossature de support, l'ensemble obtenu étant surmoulé ensuite dans le carter. En particulier, l'ossature comporte sur sa face intérieure un ensemble de pattes élastiques et de butées, qui assurent le maintien et le positionnement, tant axial qu'angulaire, des bagues collectrices. De tels moyens de positionnement maintiennent en place les bagues collectrices, pendant le surmoulage, en limitant les déplacements de ces bagues lors du passage du flux de matière de surmoulage par les zones évidées prévues à cet effet.

L'ossature de support, de forme générale annulaire, est suffisamment robuste pour assurer le maintien des bagues collectrices et du bouclier, en particulier lors de la manipulation de l'ensemble en vue de son introduction dans le moule de surmoulage, tout en conservant une certaine souplesse lui permettant de se déformer suffisamment, lors de l'introduction dans le moule de surmoulage, pour épouser la forme parfaitement ronde du noyau de ce moule, même si l'assemblage précédemment réalisé n'est pas lui-même parfaitement circulaire.

Les parties pleines de l'ossature de support garantissent une distance radiale constante entre le bouclier de protection électromagnétique, d'une part, et les bagues collectrices, d'autre part.

Les zones évidées de cette ossature, judicieusement réparties, permettent la libre circulation de la matière plastique lors du surmoulage, entre les bagues collectrices et le bouclier.

La matière plastique se répartit ainsi de la manière la plus homogène possible entre tous les éléments du collecteur de flux. Il est de toute façon évité que le bouclier de protection magnétique soit écrasé contre les bagues collectrices.

Dans une forme de réalisation préférée du dispositif de détection de couple, objet de l'invention, l'ossature est composée de deux parties complémentaires de forme annulaire, avec une première partie recevant intérieurement l'une des bagues collectrices et avec une seconde partie recevant intérieurement l'autre bague collectrice, les deux parties étant réunies en enserrant le bouclier de protection électromagnétique. L'ossature de support, ainsi réalisée en deux parties, permet un assemblage aisé et automatisable des deux bagues collectrices, respectivement dans deux « demi-supports ».

Avantageusement, ces deux parties ou « demi-supports » sont des pièces identiques, pourvues de formes complémentaires et répétitives sur leur circonférence pour leur assemblage réciproque précis.

L'invention a aussi pour objet un procédé de fabrication d'un dispositif de détection de couple pour direction de véhicule automobile, du genre ici concerné, c'est-à-dire comprenant un support collecteur de flux magnétique, de forme générale annulaire, avec deux bagues collectrices disposées du côté intérieur du support collecteur, et avec un bouclier de protection électromagnétique disposé du côté extérieur du support collecteur, le dispositif étant prévu pour être placé dans un carter d'un système de direction, ce procédé consistant:
- à prévoir une ossature de forme générale annulaire, comportant des zones évidées,
- à monter et positionner les bagues collectrices sur le côté intérieur de l'ossature,
- à monter et positionner le bouclier de protection électromagnétique sur le côté extérieur de l'ossature,
- à surmouler l'assemblage ainsi réalisé dans le carter, la matière plastique de surmoulage circulant et pénétrant des les zones évidées, entre les bagues collectrices et le bouclier.

Dans un mode de mise en oeuvre préféré de ce procédé, on prévoit une ossature composée de deux parties complémentaires de forme annulaire, une bague collectrice est montée et positionnée sur une première partie, l'autre bague collectrice est montée et positionnée sur la seconde partie, et les deux parties sont réunies en enserrant le bouclier de protection électromagnétique, avant l'opération de surmoulage dans le carter.

L'invention sera mieux comprise à l'aide de la description qui suit, en référence au dessin schématique annexé représentant, à titre d'exemple, une forme d'exécution de ce dispositif de détection de couple.
Figure 1 est une vue d'ensemble, en perspective, d'un support collecteur de flux magnétique,
Figure 2 représente, en perspective, un carter comportant un support collecteur de flux surmoulé,
Figure 3 est une vue en perspective éclatée du support collecteur de flux, avec ossature en deux parties,
Figure 4 représente plus en détail, en perspective, l'une des deux parties de l'ossature,
Figure 5 est une vue en perspective du support collecteur de flux, à l'état assemblé, avec indication de la circulation de matière lors du surmoulage.

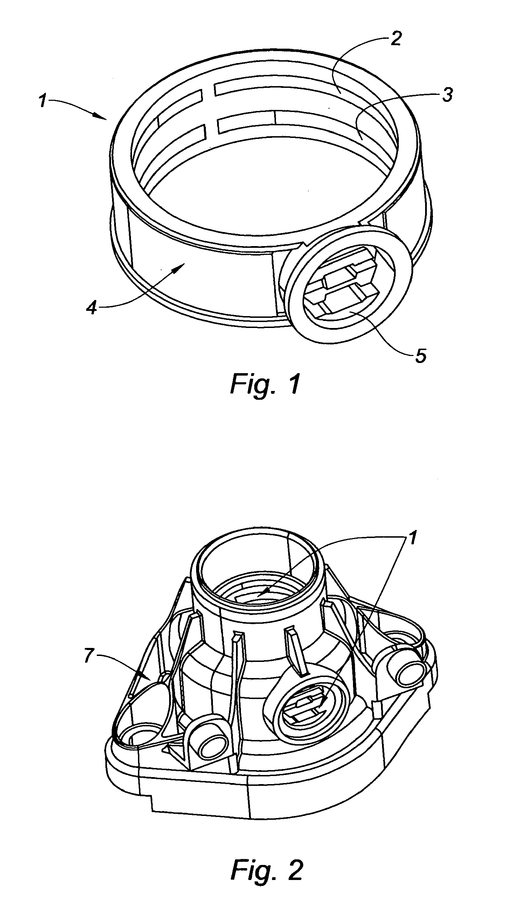

Comme le montre la figure 1, un support collecteur de flux magnétique, désigné globalement par la référence 1, possède une forme générale annulaire. Il comporte, intérieurement, deux bagues collectrices 2 et 3, et extérieurement, un bouclier de protection électromagnétique 4. Dans une zone particulière de la périphérie du support collecteur 1, où le bouclier 4 est interrompu, il est prévu une partie spécifique 5 destinée à l'adaptation d'un capteur de flux magnétique (non représenté).

Dans une réalisation connue, une matière plastique de surmoulage 6 prend place entre les bagues collectrices 2 et 3, d'une part, et le bouclier 4, d'autre part.

Comme l'illustre la figure 2, un tel support collecteur 1 est prévu pour être placé dans un carter 7 appartenant au système de direction du véhicule concerné. Par « carter » on entend ici soit un carter complet, soit une partie de carter présente dans la région concernée.

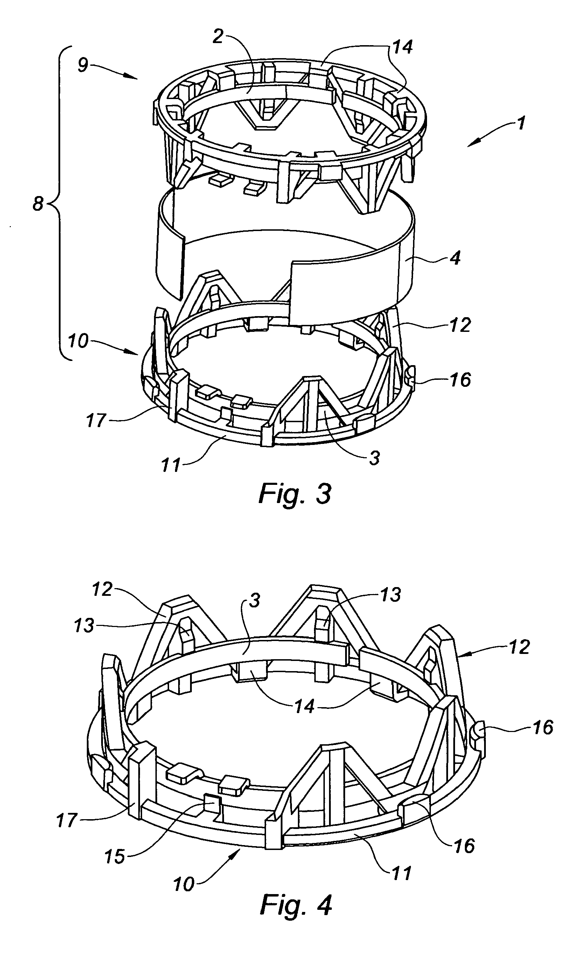

En se référant aux figures 3 et suivantes, le support collecteur 1 possède une ossature 8, de forme générale annulaire, sur laquelle sont montées intérieurement les deux bagues collectrices 2 et 3, et sur laquelle est aussi monté extérieurement le bouclier 4.

L'ossature 8 est composée elle-même de deux parties complémentaires 9 et 10, qui sont deux pièces annulaires identiques dont l'une est représentée seule sur la figure 4.

Chaque partie 9 ou 10 de l'ossature 8 comporte une couronne 11 et divers éléments 12 droits ou obliques, du genre barreaux, rattachés à la couronne 11, qui forment un motif géométrique se répétant sur la circonférence de cette partie 9 ou 10. Les deux parties 9 et 10 sont prévues pour s'assembler l'une à l'autre, par emboîtement réciproque des formes complémentaires réalisées sur leur circonférence.

Chaque partie 9 ou 10 de l'ossature 8 présente, intérieurement, un ensemble de pattes élastiques 13 et de butées 14, prévues pour positionner axialement et maintenir l'une des bagues collectrices 2 et 3. Au moins une patte 15 est aussi prévue sur la couronne 11 pour le positionnement angulaire de cette bague. Ainsi, la partie 9 reçoit la première bague collectrice 2, et l'autre partie 10 reçoit la seconde bague collectrice 3.

La couronne 11 de chaque partie 9 ou 10 de l'ossature 8 comporte aussi, répartis à intervalles angulaires réguliers, des ergots 16 prévus pour le maintien d'un bord du bouclier 4. Une butée 17 est encore prévue sur la couronne 11 pour le positionnement angulaire du bouclier 4.

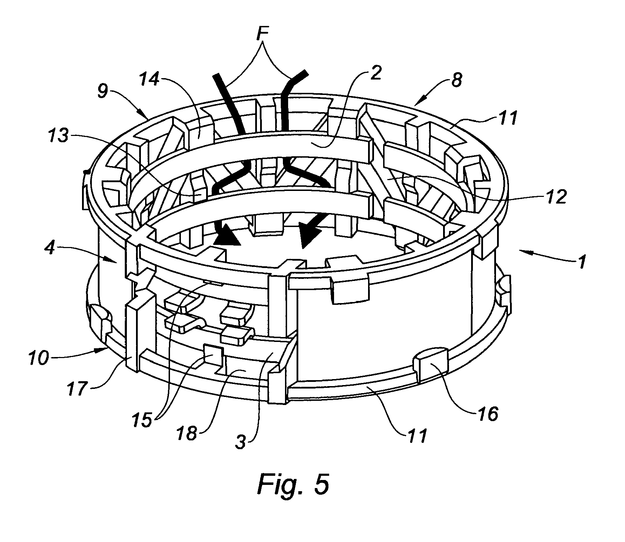

Comme le montre la figure 3, les deux parties 9 et 10 de l'ossature 8, sur lesquelles sont déjà montées et positionnées les deux bagues collectrices 2 et 3, sont amenées de part et d'autre du bouclier 4, puis sont rapprochées et emboîtées en enserrant le bouclier 4, qui ainsi se trouve lui aussi maintenu et positionné (voir aussi figure 5).

La réunion des deux parties 9 et 10 forme l'ossature 8 définitive, laquelle comporte d'une part des zones pleines (couronne 11 et éléments 12) imposant une distance radiale constante entre les bagues collectrices 2, 3 et le bouclier 4, et d'autre part des zones évidées 18.

Dans cette configuration, il est procédé à une opération de surmoulage, avec la matière plastique de surmoulage 6, dans le carter 7. Cette matière plastique 6 est injectée, dans un moule approprié, en circulant et pénétrant dans les zones évidées 18, comme indiqué par les flèches F sur la figure 5. Ainsi, la matière plastique de surmoulage vient aussi se figer entre les bagues collectrices 2, 3 et le bouclier 4, et ces divers éléments sont donc solidarisés avec le carter 7 pour former un ensemble monobloc.

On ne s'éloignerait pas du cadre de l'invention, telle que définie dans les revendications annexées :
- en modifiant les formes de détail de l'ossature,
- en réalisant cette ossature d'un seul tenant, au lieu de deux parties,
- en destinant ce dispositif à des systèmes de direction de tous types, en particulier des directions assistées hydrauliques ou électriques.

## Revendications

1. Dispositif de détection de couple pour direction de véhicule automobile, le dispositif comprenant un support collecteur (1) de flux magnétique, de forme générale annulaire, avec deux bagues collectrices (2, 3) disposées du côté intérieur du support collecteur (1), et avec un bouclier (4) de protection électromagnétique disposé du côté extérieur du support collecteur (1), le dispositif étant prévu pour être placé dans un carter (7) d'un système de direction, **caractérisé en ce que** ledit support collecteur (1) de flux magnétique comporte une ossature (8) de forme générale annulaire, pourvue intérieurement de moyens d'accrochage et de positionnement (13, 14, 15) des bagues collectrices (2, 3), et pourvue extérieurement de moyens de maintien et de positionnement (16, 17) du bouclier (4) de protection électromagnétique, cette ossature (8) présentant, dans son épaisseur entre les bagues collectrices (2, 3) et le bouclier (4), d'une part des parties pleines (11, 12) imposant une distante radiale constante entre lesdites bagues collectrices (2, 3) et le bouclier (4), et d'autre part des zones évidées (18), aptes à permettre une circulation et pénétration de matière plastique (6) entre les bagues collectrices (2, 3) et le bouclier (4), lors d'une opération de surmoulage du dispositif dans le carter (7).

2. Dispositif de détection de couple selon la revendication 1, **caractérisé en ce que** l'ossature (8) comporte sur sa face intérieure un ensemble de pattes élastiques et de butées (13, 14, 15), qui assurent le maintien et le positionnement, tant axial qu'angulaire, des bagues collectrices (2, 3).

3. Dispositif de détection de couple selon la revendication 1 ou 2, **caractérisé en ce que** l'ossature (8) est composée de deux parties complémentaires (9, 10) de forme annulaire, avec une première partie (9) recevant intérieurement l'une des bagues collectrices (2) et avec une seconde partie (10) recevant intérieurement l'autre bague collectrice (3), les deux parties (9, 10) étant réunies en enserrant le bouclier (4) de protection électromagnétique.

4. Dispositif de détection de couple selon la revendication 3, **caractérisé en ce que** les deux parties (9, 10) constitutives de l'ossature (8) sont des pièces identiques, pourvues de formes complémentaires et répétitives (12) sur leur circonférence pour leur assemblage réciproque précis.

5. Procédé de fabrication d'un dispositif de détection de couple pour direction de véhicule automobile, comprenant un support collecteur (1) de flux magnétique, de forme générale annulaire, avec deux bagues collectrices (2, 3) disposées du côté intérieur du support collecteur (1), et avec un bouclier (4) de protection électromagnétique disposé du côté extérieur du support collecteur (1), le dispositif étant prévu pour être placé dans un carter (7) d'un système de direction, **caractérisé en ce qu'**il consiste :
- à prévoir une ossature (8) de forme générale annulaire, comportant des zones évidées (18),
- à monter et positionner les bagues collectrices (2, 3) sur le côté intérieur de l'ossature (8),
- à monter et positionner le bouclier (4) de protection électromagnétique sur le côté extérieur de l'ossature (8),
- à surmouler l'assemblage ainsi réalisé dans le carter (7), la matière plastique de surmoulage (6) circulant et pénétrant des les zones évidées (18), entre les bagues collectrices (2, 3) et le bouclier (4).

6. Procédé selon la revendication 5, **caractérisé en ce qu'**est prévue une ossature (8) composée de deux parties complémentaires (9, 10) de forme annulaire, **en ce qu'**une bague collectrice (2) est montée et positionnée sur une première partie (9), **en ce que** l'autre bague collectrice (3) est montée et positionnée sur la seconde partie (10), et **en ce que** les deux parties (9, 10) sont réunies en enserrant le bouclier (4) de protection électromagnétique, avant l'opération de surmoulage dans le carter (7).

## Patentansprüche

1. Vorrichtung zur Erkennung des Drehmoments für die Lenkung eines Kraftfahrzeugs, wobei die Vorrichtung einen allgemein ringförmigen Magnetflusskollektorträger (1) mit zwei Kollektorringen (2, 3) umfasst, die an der Innenseite des Kollektorträgers (1) angeordnet sind, und mit einem elektromagnetischem Schutzschild (4), der an der Außenseite des Kollektorträgers (1) angeordnet ist, wobei die Vorrichtung für eine Platzierung in einem Gehäuse (7) eines Lenksystems vorgesehen ist, **dadurch gekennzeichnet, dass** der Magnetflusskollektorträger (1) ein allgemein ringförmiges Gerüst (8) aufweist, das innen mit Klammer- und Positionierungsmitteln (13, 14, 15) der Kollektorringe (2, 3) ausgestattet ist und außen mit Halte- und Positionierungsmitteln (16, 17) des elektromagnetischen Schutzschilds (4) ausgestattet ist, wobei dieses Gerüst (8) in seiner Stärke zwischen den Kollektorringen (2, 3) und dem Schild (4) einerseits volle Teile (11, 12), die einen konstanten radialen Abstand zwischen den Kollektorringen (2, 3) und dem Schild (4) erzwingen, und andererseits ausgesparte Zonen (18) aufweist, die imstande sind, bei einer Overmoulding-Operation der Vorrichtung in dem Gehäuse (7) eine Zirkulation und ein Eindringen von Kunststoff (6) zwischen die Kollektorringe (2, 3) und den Schild (4) zu ermöglichen.

2. Vorrichtung zur Erkennung des Drehmoments nach Anspruch 1, **dadurch gekennzeichnet, dass** das Gerüst auf seiner Innenseite eine Gruppe elastischer Zungen und Anschläge (13, 14, 15) aufweist, die sowohl axial als auch ringförmig den Halt und die Positionierung der Kollektorringe (2, 3) sicherstellen.

3. Vorrichtung zur Erkennung des Drehmoments nach Anspruch 1 oder 2, **dadurch gekennzeichnet, dass** das Gerüst (8) aus zwei ringförmigen komplementären Teilen (9, 10) zusammengesetzt ist mit einem ersten Teil (9), der innen einen der Kollektorringe (2) aufnimmt und mit einem zweiten Teil (10), der innen den anderen Kollektorring (3) aufnimmt, wobei die zwei Teile (9, 10) bei Einschluss des elektromagnetischen Schutzschilds (4) vereint sind.

4. Vorrichtung zur Erkennung des Drehmoments nach Anspruch 3, **dadurch gekennzeichnet, dass** die zwei das Gerüst (8) bildenden Teile (9, 10) identische Teile sind, die auf ihrem Umfang zwecks ihrer gegenseitigen präzisen Verbindung mit komplementären und sich wiederholenden Formen (12) ausgestattet sind.

5. Verfahren zur Herstellung einer Vorrichtung zur Erkennung des Drehmoments für die Lenkung eines Kraftfahrzeugs, die einen allgemein ringförmigen Magnetflusskollektorträger (1) mit zwei Kollektorringen (2, 3) umfasst, die an der Innenseite des Kollektorträgers (1) angeordnet sind, und mit einem elektromagnetischem Schutzschild (4), der an der Außenseite des Kollektorträgers (1) angeordnet ist, wobei die Vorrichtung für eine Platzierung in einem Gehäuse (7) eines Lenksystems vorgesehen ist, **dadurch gekennzeichnet, dass** es darin besteht:
- Bereitstellung eines allgemein ringförmigen Gerüsts (8), das ausgesparte Zonen (18) aufweist,
- Montage und Positionierung der Kollektorringe (2, 3) auf der Innenseite des Gerüsts (8),
- Montage und Positionierung des elektromagnetischen Schutzschilds (4) auf der Außenseite des Gerüsts (8),
- Overmoulding der derart in dem Gehäuse (7) hergestellten Montage, wobei der Overmoulding-Kunststoff (6) ab den ausgesparten Zonen (18) zwischen den Kollektorringen (2, 3) und den Schild (4) zirkuliert und eindringt.

6. Verfahren nach Anspruch 5, **dadurch gekennzeichnet, dass** ein Gerüst (8) vorgesehen ist, das aus zwei ringförmigen komplementären Teilen (9, 10) zusammengesetzt ist, dass ein Kollektorring (2) auf einem ersten Teil (9) montiert und positioniert wird, dass der andere Kollektorring (3) auf dem zweiten Teil (10) montiert und positioniert wird und dass die zwei Teile bei Einschluss des elektromagnetischen Schutzschilds (4) vor der Overmoulding-Operation in dem Gehäuse (7) vereint werden.

## Claims

1. A torque detection device for a motor vehicle steering system, the device comprising a magnetic flux collector holder (1), with a generally annular shape, with two slip rings (2, 3) positioned on the inner side of the collector holder (1), and with an electromagnetic protection shield (4) positioned on the outer side of the collector holder (1), the device being provided to be placed in a casing (7) of a steering system, **characterized in that** said magnetic flux collector holder (1) includes a framework (8) with a generally annular shape, inwardly provided with fastening and positioning means (13, 14, 15) for the slip rings (2, 3), and outwardly provided with maintaining and positioning means (16, 17) for the electromagnetic protection shield (4), said framework (8) having, in its thickness between the slip rings (2, 3) and the shield (4), solid portions (11, 12) imposing a constant radial distance between said slip rings (2, 3) and the shield (4) on the one hand, and hollow areas (18), capable of allowing a circulation and penetration of plastic material (6) between the slip rings (2, 3) and the shield (4), during an overmolding operation of the device in the casing (7), on the other hand.

2. The torque detection device according to claim 1, **characterized in that** the framework (8) includes, on the inner face thereof, a set of elastic tabs and stops (13, 14, 15), which ensure the maintenance and positioning, both axial and angular, of the slip rings (2, 3).

3. The torque detection device according to claim 1 or 2, **characterized in that** the framework (8) is made up of two complementary portions (9, 10) with an annular shape, with a first portion (9) inwardly receiving one of the slip rings (2) and with a second portion (10) inwardly receiving the other slip ring (3), the two portions (9, 10) being joined by gripping the electromagnetic protection shield (4).

4. The torque detection device according to claim 3, **characterized in that** the two portions (9, 10) making up the framework (8) are identical parts, provided with complementary and repetitive shapes (12) on their circumference for the precise reciprocal assembly thereof.

5. A method for manufacturing a torque detection device for a motor vehicle steering system, comprising a magnetic flux collector holder (1), with a generally annular shape, with two slip rings (2, 3) positioned on the inner side of the collector holder (1), and with an electric protection shield (4) positioned on the outer side of the collector holder (1), the device being provided to be placed in a casing (7) of a steering system, **characterized in that** it consists of:
- providing a framework (8) with a generally annular shape, including hollow areas (18),
- mounting and positioning the slip rings (2, 3) on the underside of the framework (8),
- mounting and positioning the electromagnetic protection shield (4) on the outer side of the framework (8),
- overmolding the assembly thus produced in the casing (7), the plastic overmolding material (6) circulating and penetrating the hollow areas (18) between the slip rings (2, 3) and the shield (4).

6. The method according to claim 5, **characterized in that** a framework (8) is provided made up of two complementary portions (9, 10) with an annular shape, **in that** one slip ring (2) is mounted and positioned on a first portion (9), **in that** the other slip ring (3) is mounted and positioned on the second portion (10), and **in that** the two portions (9, 10) are joined while gripping the electromagnetic protection shield (4), before the overmolding operation in the casing (7).
